(19) Europäisches Patentamt
European Patent Office
Office européen des brevets

(11) EP 4 585 299 A1

# (12) EUROPEAN PATENT APPLICATION

(43) Date of publication:
**16.07.2025 Bulletin 2025/29**

(21) Application number: **24151280.5**

(22) Date of filing: **11.01.2024**

(51) International Patent Classification (IPC):
***B01D 71/52** (2006.01)* ***C08G 65/26** (2006.01)*

(52) Cooperative Patent Classification (CPC):
**B01D 71/80; B01D 53/228; B01D 67/0006; B01D 71/52; B01D 71/82; C08G 65/2609**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Johannes Gutenberg-Universität Mainz**
**55122 Mainz (DE)**

(72) Inventors:
- **Frey, Holger**
  **55128 Mainz (DE)**
- **Matthes, Rebecca**
  **55128 Mainz (DE)**
- **Dreier, Philip**
  **55128 Mainz (DE)**
- **Verbeke, Rhea**
  **1560 Hoeilaart (BE)**

(74) Representative: **Durm Patentanwälte PartG mbB**
**Patentanwälte**
**Moltkestrasse 45**
**76133 Karlsruhe (DE)**

## (54) POLYETHER COPOLYMERS FOR MEMBRANE APPLICATIONS

(57) The present invention concerns polyether copolymers comprising monomer units -[$CH_2$-$CH_2$-O]-, -[$CH_2$-CHR-O]- and -[$CH_2$-$CHR^2$-O]-, wherein residue R is methoxymethyl and residues $R^2$ comprise a reactive group, preferably a crosslinkable group. The invention further concerns a process for the preparation of the polyether copolymers and a process for the preparation of membranes from the polyether copolymers. Further the membranes themselves and the use thereof for the separation of fluids are subject-matter of the present application.

EP 4 585 299 A1

## Description

## Introduction

The present invention concerns polyether copolymers comprising monomer units -[$CH_2$-CHz-O]-, -[$CH_2$-CHR-O]- and -[$CH_2$-$CHR^2$-O]-, wherein residue R is methoxymethyl and residues $R^2$ comprise a reactive group, preferably a crosslinkable group. The invention further concerns a process for the preparation of the polyether copolymers and a process for the preparation of membranes from the polyether copolymers. Further the membranes themselves and the use thereof for the separation of fluids are subject-matter of the present application.

## Background of the invention

Membrane separation technology has gained an important place in the water, chemical and pharmaceutical industry. In 2016, the global market size of gas separation membranes was estimated to 1.89 bn US$, while until 2026 a growth to 3.85 bn US$ is predicted.

Membranes retain one (or more) component(s) of a mixture, while other components may freely permeate through the membrane under a driving force that can be a pressure, concentration or potential gradient. Membranes may be applied in the separation of a range of components of varying molecular weights in gas or liquid phases, including but not limited to desalination and gas separations. Membrane separation has several advantages to offer compared to other separation processes, such as distillation, adsorption, absorption or solvent extraction. Some of the benefits include continuous operation, lower energy consumption, possibility of integration with other separation processes, mild conditions, environment friendly, easy up-scaling, feasibility of making tailor-made membranes and reduced requirement of additives.

Membranes are characterized by two main parameters: permeability, i.e. how permeable the membrane is for the gas or liquid, and selectivity, i.e. how good the membrane can selectively separate components of a mixture. Many polymeric materials can be processed to obtain a selective membrane, including polyamides, polycarbonates, polyimides, and polysulfones. However, many of these materials suffer from a permeability-selectivity trade-off, meaning that it is not possible to concurrently achieve high selectivities and high permeabilities (L.M. Robeson, The upper bound revisited, J. Memb. Sci. 320 (2008) 390-400; doi: 10.1016/j.memsci.2008.04.030). In addition, many polymeric materials swell or degrade under demanding conditions (low and high pH, organic solvents, oxidants and the like), limiting the application of membrane technology in harsh streams. Furthermore, the processing of promising polymers into highly permeable but selective membranes poses challenges as several requirements need to be fulfilled simultaneously, such as high mechanical stability and thin-film processing (Galizia, M., Chi, W. S., Smith, Z. P., Merkel, T. C., Baker, R. W., & Freeman, B. D. (2017). 50th anniversary perspective: polymers and mixed matrix membranes for gas and vapor separation: a review and prospective opportunities. Macromolecules, 50(20), 7809-7843). There is thus an ongoing quest to achieve new membrane materials that (i) achieve high performance in terms of selectivity and permeability, (ii) are stable in challenging conditions, (iii) can be processed as thin films.

One class of materials that has been used for gas separations, especially for the selective separation of $CO_2$ from other gases ($N_2$, $H_2$), is based on poly(ethylene oxide) (PEO). Rubbery polar membranes with ethylene oxide (EO) segments have shown excellent $CO_2$ affinity thanks to enhanced interaction with the $CO_2$ quadrupole moment, leading to the commercialization of the Polaris™ membrane by MTR Membrane Technology and Research, Newark, CA, USA, the current state-of-the-art EO-based membrane (L.S. White, K.D. Amo, T. Wu, T.C. Merkel, Extended field trials of Polaris sweep modules for carbon capture, J. Membr. Sci. 542 (2017) 217-225). The ethylene oxide-segments in PEO provide the best combination of $CO_2$ permeability and $CO_2/N_2$ and $CO_2/H_2$ selectivity known to date (Galizia, M., Chi, W. S., Smith, Z. P., Merkel, T. C., Baker, R. W., & Freeman, B. D. (2017). 50th anniversary perspective: polymers and mixed matrix membranes for gas and vapor separation: a review and prospective opportunities. Macromolecules, 50(20), 7809-7843.). The main aim of novel poly(ethylene oxide)-based materials is to break the permeability-selectivity trade-off by, for example, incorporating high concentrations of ethylene oxide-segments in polymers, while at the same time avoiding crystallization of the poly(ethylene oxide)-segments, as crystallization substantially decreases gas permeability. Therefore, the usage of poly(ethylene oxide) is strongly limited to low molecular weights (< 1 kg $mol^{-1}$). Many strategies have been proposed to inhibit crystallization, such as cross-linking or copolymerization with hard blocks, but they reduce permeability and selectivity (Bandehali, S., Moghadassi, A., Parvizian, F., Hosseini, S. M., Matsuura, T., & Joudaki, E. (2020). Advances in high carbon dioxide separation performance of poly (ethylene oxide)-based membranes. Journal of Energy Chemistry, 46, 30-52).

The usage of racemic glycidyl ethers generally enables the synthesis of amorphous polyethers by inhibiting the crystallization of the resulting PEO backbone. In the past, various poly(glycidyl ethers) have been proposed for this purpose. Additionally, incorporation of a certain amount of glycidyl ethers in poly(ethylene oxide)-based polymers, e.g., via copolymerization of ethylene oxide and glycidyl ethers, also results in amorphous polyethers. However, the sterically least

demanding and most polar glycidyl ether, namely glycidyl methyl ether (GME), has not been utilized for this purpose to date (R. Matthes, H. Frey, Polyethers Based on Short-Chain Alkyl Glycidyl Ethers: Thermoresponsive and Highly Biocompatible Materials, Biomacromolecules. 23 (2022) 2219-2235). Recently, researchers at the University of Mainz were the first to demonstrate a highly controlled copolymerization of ethylene oxide and glycidyl methyl ether (WO 2022/238532 A1).

## Purpose of the invention

It is the objective of the present invention to provide alternative polymers that can alleviate at least some of the aforementioned disadvantages of PEO-based membranes. The alternative polymers should especially be suited to replace PEO-based polymers in membrane applications. It preferably provides higher selectivity and permeability in the separation of fluids with such membranes. The polymers preferably provide the membranes with a high permeability for carbon dioxide and/or hydrogen. The polymers preferably provide the membranes with a high selectivity for carbon dioxide and water vapor in respect to other fluids and especially in respect to nitrogen and hydrogen. It is also desired to provide a process that allows preparation of such polymers and /or membranes in a simple and commercially feasible way. It is further an objective to provide polymers with low dispersity and membranes made thereof.

## Detailed description

In this invention, an amorphous polymer as alternative to PEO is described, which can be converted into membranes that provide selective permeabilities for carbon dioxide, water vapor and other fluids. Further, the utilization of the established anionic ring-opening polymerization (AROP) as the method of choice for polymer production enables an industrially applicable synthesis route.

The present invention concerns polyether copolymers comprising

(i) at least 1% of monomer units that have a structure of formula (I):

$$-[CH_2-CH_2-O]- \qquad (I),$$

(ii) at least 1% of monomer units that have a structure of formula (II):

$$-[CHR-CH_2-O]- \qquad (II),$$

wherein residue R is methoxymethyl,

(iii) at least 1% of monomer units that have a structure of formula (III):

$$-[CHR^2-CH_2-O]- \qquad (III),$$

wherein residue $R^2$ comprises at least one reactive group and

wherein all amounts in percent are based on the total number of monomer units in the polyether copolymers.

Polyether copolymers with this structure are especially useful for the preparation of membranes. Membranes produced thereof achieve high performance in terms of selectivity and permeability (see examples) and are stable under harsh conditions. Furthermore, in contrast to poly(ethylene oxide) the inventive polyether copolymers show merely little or no tendency to crystallize even at high molecular weights. While the use of poly(ethylene oxide) is restricted to a molecular weight of 1.000 g/mol or less, the inventive polymers may be used with a number average molecular weight of 50.000 g/mol and more. Even with such high molecular weights the inventive polymers show little or no tendency to crystallize.

Because of their similar structures, the monomer units of formula (II) provide the polyether copolymers of the present invention with properties similar to those of homopolymers of ethylene oxide. In contrast to homopolymers of ethylene oxide, the inventive copolymers do not comprise crystalline domains or do not comprise such domains to a large extent. Other relevant properties are affinity to carbon dioxide, high chemical stability and long-term membrane stability under operating conditions in a membrane for material separation.

The monomer units of formula (II) have an affinity to carbon dioxide that is similar to ethylene oxide monomer units because it's a dimeric structure to an ethylene oxide monomer unit. This behavior is in pronounced contrast to other used copolymers of ethylene oxide and longer alkylene oxides, such as propylene oxide (PO), which have considerably lower affinity for carbon dioxide than PEO. In these polymers more than 30% propylene oxide incorporation already leads to insolubility in water at 25 °C. In contrast, the water solubility and solubility in solvents in general is similar to that of PEG. The inventive polymers have a high solubility in polar solvents such as for example water or ethanol. It is therefore possible to

further process the polyether copolymers according to the invention with very unproblematic (i.e. not toxic, volatile, green etc.) solvents.

The polyether copolymers of the present invention also provide the same chemical stability as poly(ethylene oxide) or copolymers of ethylene oxide and propylene oxide as for example MTR's Polaris™ membrane. As can be seen from the examples of the present invention, these properties provide membranes prepared of the polyether copolymers of the present invention with high selectivities.

While preserving features that are important for the properties of membranes, the monomer units of formula (II) provide the polyether polymers of the present invention with an amorphous structure. The side chains prevent crystallization of the polyether copolymers of the present invention, which is highly beneficial as crystalline domains do not allow gas passage. In the present invention, EO-based polymers of varying molecular weights can be provided that show merely little or no tendency to crystallize. As polymers of higher molecular weights can be achieved then according to the state of the art and only a few or no crystalline domains are present, their processing into thin-film membranes becomes possible, which is highly advantageous to achieve high permeabilities (as permeability is inversely proportional to the film thickness). If required, cross-linking can further help to improve the mechanical properties of the membrane film, while for the known polymers, cross-linking is necessary to inhibit crystallization of the ethylene oxide segments. Therefore, the polyether copolymers of the present invention allow for more freedom in membrane structure design and their processing as thin films.

Polymer units of formula (II) are structural isomers of ethylene oxide monomer units and therefore provide a high affinity to carbon dioxide while simultaneously inhibiting crystallization. At the same time they are easily and economically accessible and membranes prepared therefrom provide high permeability and selectivity.

The at least one reactive group comprised in $R^2$ provides a possibility to alter the polymer after its preparation without altering its backbone or its side chains, other than $R^2$. The said reactive group can be used to crosslink the polymer via different strategies. If necessary to obtain a mechanically stable film, the reactive group may therefore be used in the preparation of membranes from the polyether copolymers of the present invention.

The reactive group is most preferably a crosslinkable group, e.g. a carbon-carbon double bond, a carbon-carbon triple bond, an epoxide or the like. Crosslinkable groups provide the opportunity to crosslink the polymer without altering other parts of the polyether copolymer. The crosslinkable groups may be used to directly produce a membrane by simply crosslinking the inventive polymers in the desired shape, which is a simple and economical method for producing a membrane. The reactive groups may also be reacted with bi- or multifunctional compounds, which are preferably of low molecular weight, e.g., the reactive groups may be allyl groups that may be reacted with polythiols, to obtain the corresponding crosslinked membrane. The crosslinking reaction may also be used to bond the inventive polyether copolymer to a support, a substrate or a matrix that comprises groups that are able to react with the crosslinkable group of the inventive polymer. Formation of a membrane and bonding to a support, a substrate or a matrix may be performed in one process step. Suitable groups that are crosslinkable are well known to the expert in the art and so are methods for crosslinking and bonding to a support, a substrate or a matrix. In principle any known crosslinkable group may be used. Preferred are however crosslinkable groups that can be crosslinked by irradiation, especially with UV/VIS.

The crosslinkable group is preferably selected from the group consisting of carbon-carbon double bonds, carbon-carbon triple bonds, epoxides, hydroxyl group, thiol group and primary and secondary amino groups. Even more preferred the crosslinkable group is selected from the group consisting of vinyl, allyl, 1-propen-1-yl, conjugated dienes and not conjugated dienes, vinylcarboxy groups,

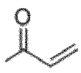 , 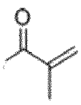 , 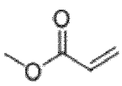 , 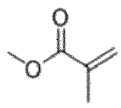 , 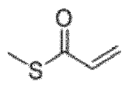 , 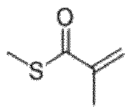 , 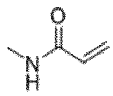 , 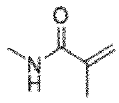 ,

furanyl, thiophenyl, pyrrolyl, succinimidyl groups, $-CH_2-Cl$, $-CH_2-Br$ and $-CH_2-I$. More preferred are inventive polyether copolymers, wherein the at least one reactive group comprised in $R^2$ is a crosslinkable group selected from the group consisting of carbon-carbon double bonds and carbon-carbon triple bonds. These groups are not reactive in the polymerization reaction and are very effective in the crosslinking reaction.

The use of crosslinkable groups that would react during the polymerization reaction for the preparation of the polymers are not preferred, as they usually cannot be part of the monomer during the preparation of the polymer. One example are epoxy groups, if the polyether is prepared by polymerization of epoxy groups. In order to prepare polymers with such groups, reactive groups may be introduced into the polymer that can be converted to crosslinkable groups after preparation of the inventive polyether copolymer. For example $R^2$ in the monomer may be provided with a hydroxy group that is protected by a protective group, e.g. allyl, methoxymethyl ether, tetrahydropyranyl, vinyl or any other suitable protective group known in the art. After preparation of the polymer, the protective group may be removed and the alcohol group may be reacted with epichlorohydrin to provide residue $R^2$ with an epoxide group that is capable to crosslink the

polyether copolymer. The reactive group and/or the crosslinkable may also be used to bond the polyether copolymer to a support, a substrate or a matrix that comprises groups that are able to react with the reactive group and/or crosslinkable group of the inventive polymer. It is preferred that the reactive group comprised in $R^2$ is either a crosslinkable group or a reactive group that can be converted into a crosslinkable group.

The polyether copolymers of the present invention may only comprise one kind of crosslinkable group. In such a case, the crosslinkable groups may either be able to react with each other. Double bonds may for example form a bond by irradiation and may thereby connect different strands of the polyether polymer. The crosslinkable groups may also be bonded by means of crosslinker, i.e. compounds that comprise at least two reactive groups that react with the crosslinkable groups of the polyether polymers of the present invention. Double bonds may for example react with polythiols in an addition reaction or with molecules comprising at least two conjugated dienes in a Diels-Alder reaction. Alternatively, different residues $R^2$ may comprise different reactive groups. In such a case the different reactive groups may be crosslinkable groups that react with each other. Also, two different polyether copolymers of the present invention that comprise different crosslinkable groups that each react with the reactive group of the other polyether copolymer, respectively, may be crosslinked with each other. However, for ease of production it is preferable to use only one type of crosslinkable group in the inventive polyether copolymers.

Formula (III) preferably represents formula (IV)

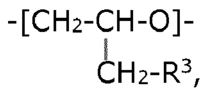

(IV)

wherein $R^3$ is selected from the group consisting of $-OR^4$, $-SR^4$ or $-NR^4_2$ and residues $R^4$ are independently of each other selected from the group consisting of hydrogen and a reactive group or a group that comprises a reactive group, preferably a reactive group as described herein.

Especially referred are inventive polyether copolymers of Formula (III), wherein $R^2$ is selected from the group consisting of

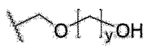
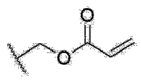
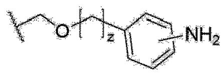
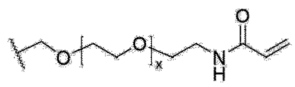
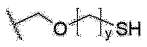
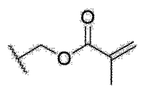
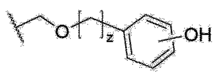
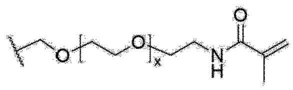
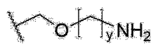
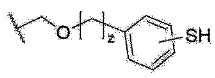
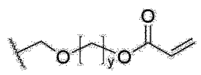
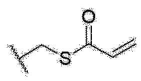
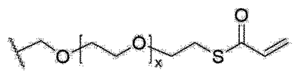
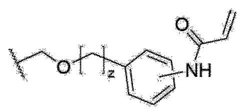
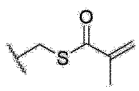
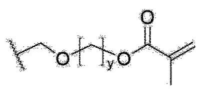
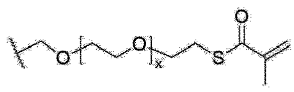

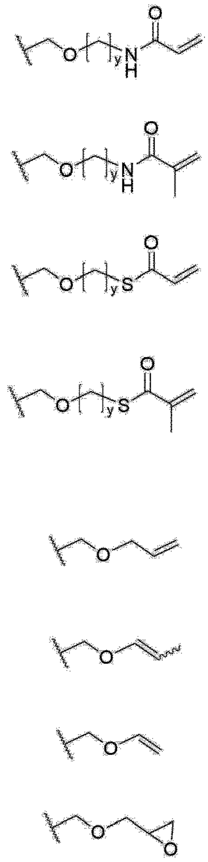
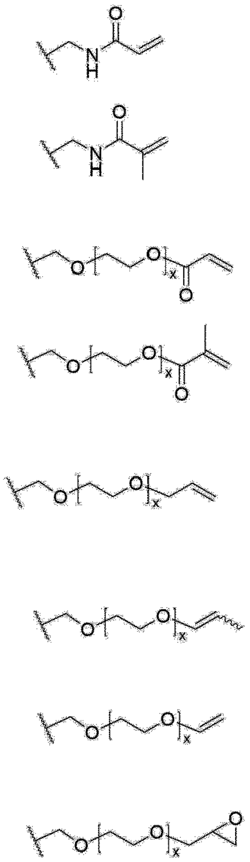
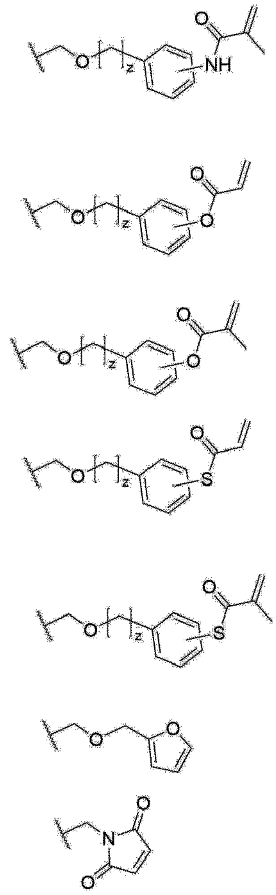
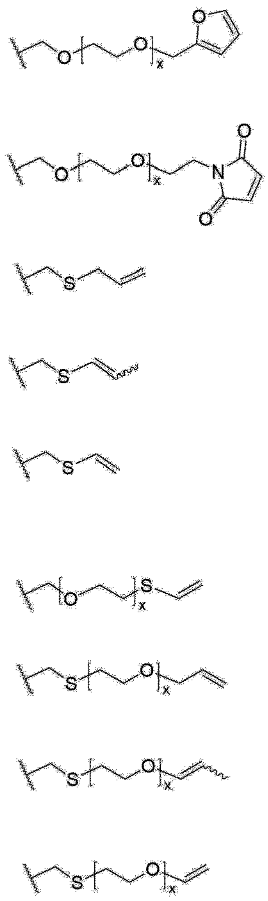

wherein x is an integer from 1 to 6, y is an integer from 2 to 6 and z is 0 or an integer from 1 to 6.

All these $R^2$ groups can be very easily be introduced into the polyether polymers in the form of glycidyl ethers. Such monomers react with the monomers of Formulae (I) and (II) smoothly under the same reaction conditions. Most preferred are inventive polyether copolymers, wherein $R^2$ is $-CH_2-O-CH_2-CH=CH_2$, which may be achieved by using allyl glycidyl ether (AGE) as monomer. The monomer is commercially available and preparation of inventive polymers with these groups may be directly achieved via copolymerization procedures. The rest $R^2$ may however also be part of monomers of other structures, as long as the monomers can be polymerized with monomers of Formulae (I) and (II).

Considering the properties of membranes prepared from the inventive polyether copolymers and simplicity of preparation, the inventive polyether copolymers preferably consist of monomer units of Formulae (I), (II) and (III) and do not comprise any other monomer units. However, for some applications it may be necessary to further alter the properties of the polyether copolymers and/or of membranes prepared thereof, the polymer may comprise other monomer units in small amounts. The inventive polymers allow such alterations without extensive changes in properties. Preferred are polyether copolymers according to the present invention, wherein the sum of all monomer units of formulae (I), (II) and (III) in the polyether copolymers is at least 90% based on all polymer units of the polymer. With at least 90% of polymer units of formulae (I), (II) and (III), the polymers essentially preserve their features, i.e. they have a small propensity for crystallization and membranes prepared thereof have high selectivity and high permeability. More preferred the sum of all monomer units of formulae (I), (II) and (III) in the polyether copolymers is at least 97% based on all polymer units of the polymer and even more preferred at least 99%.

Further preferred are polyether copolymers of the present invention, comprising

(i) 10% to 90% of monomer units that have a structure of formula (I),
(ii) 3% to 85% of monomer units that have a structure of formula (II) and
(iii) 5% to 30% of monomer units that have a structure of formula (III).

More preferred are polyether copolymers of the present invention, comprising

(i) 20% to 90% of monomer units that have a structure of formula (I),
(ii) 5% to 70% of monomer units that have a structure of formula (II) and

(iii) 7% to 30% of monomer units that have a structure of formula (III).

Most preferred are polyether copolymers of the present invention, comprising

(i) 65% to 90% of monomer units that have a structure of formula (I),
(ii) 5% to 30% of monomer units that have a structure of formula (II) and
(iii) 7% to 30% of monomer units that have a structure of formula (III).

Membranes prepared from inventive polyether copolymers with these compositions have a small propensity for crystallization and preferably do not comprise any crystalline domains. They also have a high affinity for carbon dioxide and high selectivities and/or a high permeabilities.

In one embodiment the polymers of the present invention comprise

(i) 20% to 90% of monomer units that have a structure of formula (I),
(ii) 5% to 30% of monomer units that have a structure of formula (II) and
(iii) 5% to 30% of monomer units that have a structure of formula (III), wherein $R^2$ is $-CH_2-O-CH_2-CH=CH_2$.

It is also preferred that the sum of the monomer units that have a structure of formula (II) or formula (III) is at least 15% and preferably at least 20%. In this case the upper limit of the range of the amount of monomer units that have a structure of formula (I) in the aforementioned embodiments is limited to 85% or 80%, respectively. In such polyether copolymers the crystallinity is especially low. All amounts of monomer units in percent in this text are based on all polymer units of the polyether copolymer.

The molecular weight of the polyether copolymers of the present invention is not especially limited. From a practical standpoint the number average molecular weight of the polyether copolymer of the present invention, is preferably at least 400 g $mol^{-1}$, more preferably the number average molecular weight is in a range of from 2,000 g $mol^{-1}$ to 50,000 g $mol^{-1}$ and most preferably in a range of from 5,000 g $mol^{-1}$ to 50,000 g $mol^{-1}$. Polyether copolymers of the present invention with a number average molecular weight in this range have good properties in regard to processability and properties of the membranes prepared therefrom. Also especially preferred are polymers of the present invention comprising

(i) 20% to 90% of monomer units that have a structure of formula (I),
(ii) 5% to 30% of monomer units that have a structure of formula (II) and
(iii) 5% to 30% of monomer units that have a structure of formula (III), wherein $R^2$ is $-CH_2-O-CH_2-CH=CH_2$ and the number average molecular weight is in a range of from 2,000 g $mol^{-1}$ to 50,000 g $mol^{-1}$.

A further preferred embodiment of the present invention is an inventive polyether copolymer, which has 1 to 10, preferably 1 to 3 and most preferably one ethylene oxide repeating unit at one or both terminal ends of the polymer. In such polymers the end groups are bonded to primary carbon atoms, which allows for simple alterations at the terminal end(s) of the polymer, e.g. when the end groups are OH groups. In one preferred embodiment of the present invention, one or both end groups of the inventive polyether copolymer backbone comprise crosslinkable groups. The crosslinkable groups are preferably as defined herein for $R^2$. Such polyether copolymers enable crosslinking via the end groups, allowing the fabrication of membranes with different methods, e.g. interfacial polymerization. Even more preferred, one or both end groups comprise epoxy groups. Preferred end groups that comprise epoxy groups are glycidyloxy groups. Glycidyloxy end groups may for example be attached to the end of the polymers by reaction of hydroxyl end groups with epichlorohydrin by nucleophilic substitution. In even more preferred polyether copolymers of the present invention one or both of the end groups comprise epoxy groups and $R^2$ if formula (III) is allyl. In most preferred polyether copolymers of the present invention one or both of the end groups are glycidyloxy groups and the $R^2$ is allyl.

A further embodiment of the present invention concerns a process for the preparation of polyether copolymers of the present invention by anionic ring-opening copolymerization (AROP) comprising the steps of:

- Providing an anion $An^-$,
- Adding ethylene oxide, a monomer of the formula

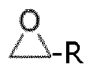

and a monomer of the formula

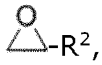

wherein R and $R^2$ are as defined for the polyether copolymers of the present invention, in the amounts as described herein and adding optionally further monomers,

- Allowing the polymerization to proceed at a temperature in the range of -10 to 90 °C.

In the process of the present invention the anion $An^-$ must be an anion suitable for anionic ring-opening copolymerization (AROP). The expert in the art can easily choose among the known anions for this purpose. The $An^-$ anion is preferably selected from the group consisting of alkyl anions, hydride, $OH^-$, alkoxide anions, $SH^-$, thioalkoxide anions, primary or secondary amine anions, amide anions, imide anions and combinations thereof. Alkyl anions and hydride anions may be provided in the form of metal alkyl or metal hydride compounds. The alkyl anions are preferably primary or secondary alkyl anions and the alkoxide anions and thioalkoxide anions are preferably anions from primary and secondary alcohols and thioalcohols, respectively. The alkoxide anion and the thioalkoxide anion may be the corresponding anion with the same structure as defined herein for the residue X (see below), with the exception of OH. The alkoxide anions and thioalkoxide anions may be the anions of C1 to C30, preferably C1 to C10 alcohols or thioalcohols in which one or more methylene group is exchanged for an oxygen atom, with the *proviso* that the alcohol or thioalcohol does not comprise two neighboring oxygen atoms. In one preferred embodiment the alkoxides are anions of alkoxy substituted alcohols. Preferred anions are the anions of methanol, ethanol, propanol, 2-methoxyethanol, 2-ethoxyethanol, allyl alcohol and ethoxy-1,2-propanediol. The imide anion is preferably a phthalimide anion.

The polyether copolymers of the present invention may also be prepared by use of anions of the formulae $X\text{-}(CH_2CH_2\text{-}O\text{-})_a^-$ or $X\text{-}(CH_2\text{-}CHR\text{-}O]_a^-$, wherein R is methoxymethyl, a may be 1 to 10 and preferably 1 to 3 and X is selected from the group consisting of OH, C1-C10-alkyl, C1-C10-alkoxy, C1-C6-dialkylamin or $(C1\text{-}C10\text{-}alkyl\text{-}CO)_2N^-$. The alkyl groups in X may be linear, branched or cyclic, saturated or unsaturated and substituted or not substituted. Preferably they are not substituted. Preferably the C1-C10-alkyl groups are methyl or ethyl. The anions selected from the group consisting of $MeOCH_2CH_2O^-$, $MeO(CH_2CH_2O)_2^-$, $BenzylOCH_2CH_2O^-$, $BzO(CH_2CH_2O)_2^-$, $(Bz)_2N\text{-}CH_2CH_2O^-$, $(Bz)_2N\text{-}(CH_2CH_2O)_2^-$, phthalimide-$CH_2CH_2O^-$, phthalimide-$(CH_2CH_2O)_2^-$, wherein Me is methyl and Bz is benzyl are preferred. More preferred are $MeO^-$, $EtO^-$, $MeO(CH_2CH_2O)_2^-$, $BzOCH_2CH_2O^-$ and $(Bz)_2N\text{-}CH_2CH_2O^-$. Preferably however the alkyl groups in $An^-$ anions are primary or secondary alkyl groups. Further, in a final step of the preparation, addition of a small amount of pure EO is possible to ensure primary hydroxyl end groups for the $\omega$-terminal of the polymer.

The counter ion to the $An^-$ anion is preferably selected from the group consisting of $Na^+$, $K^+$ and $Cs^+$. The anion $An^-$ may be provided in an inert solvent. The solvent is preferably a non-protic solvent and most preferably dimethyl sulfoxide (DMSO). Also preferably the reaction is performed in the same solvent.

Anionic ring-opening polymerizations with alkyl glycidyl ethers undergo chain transfer reactions as follows:

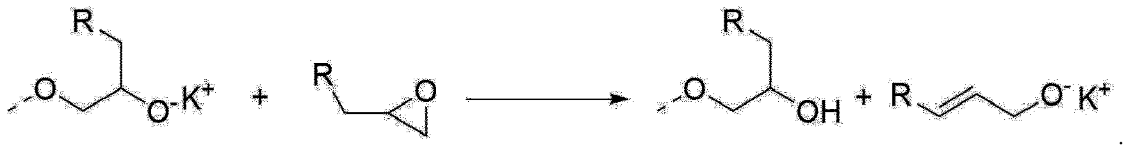

In this equation R is the alkoxy residue of the alkyl glycidyl ether. These side reactions increase with the temperature. Therefore, high molecular weight polymers can only be obtained, if the reaction temperature is not above 90 °C. The chain transfer reaction results in a broad distribution of molecular weight and therefore in a high dispersity. Therefore, lower polymerization temperatures also provide polymers of the present invention with lower dispersity. On the other hand, alkyl glycidyl ethers are as reactive in the anionic ring-opening polymerization as ethylene oxide. For this reason the polymerization may be performed at temperatures as low as -10 °C. Preferably the polymerization is performed at a temperature in the range of -10 to 90 °C, more preferably in the range of 10 to 70 °C and most preferred at a temperature in the range of 10 to 60 °C.

A further problem in anionic ring-opening polymerizations is that commercially available alkyl glycidyl ethers are prepared from epichlorohydrin. Part of the epichlorohydrin remains in the alkyl glycidyl ether. Presence of alkyl glycidyl ethers leads to termination reactions as follows:

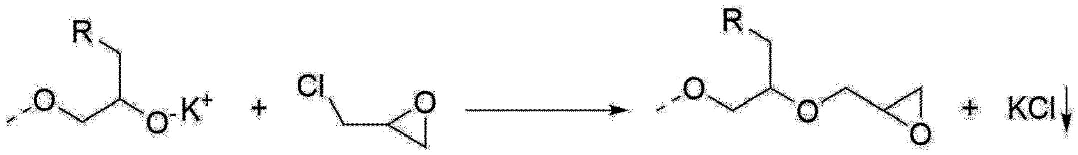

This in turn leads to low molecular weights and high dispersity of the product. Low dispersities are preferred. The polymers of the present invention are therefore preferably prepared by reaction temperatures of -10 to 90°C or less and by the use of monomers that comprise less than 2 wt% of epichlorohydrin. Preferably the alkyl glycidyl ethers comprise less than 1 wt% of epichlorohydrin and more preferably less than 0.1 wt%. Most preferably the alkyl glycidyl ethers are free of epichlorohydrin. Furthermore, high temperatures also lead to side reactions of the starting anion $An^-$ or the end group of the living polymer. Limitation of the temperature in the aforementioned range therefore also improves the end-group fidelity at the $\alpha$-terminal of the polymers of the present invention and allows for end-group fidelities of 95% or more of the end group, which is preferred.

Ethylene oxide and glycidyl methyl ether exhibit an equal reactivity in a statistical anionic ring-opening copolymerization which results in an ideally random distribution of glycidyl methyl ether units throughout the polyether backbone. The copolymerization with glycidyl methyl ether hence enables the synthesis of polyethers with molecular weights exceeding 1 kg $mol^{-1}$ without obtaining crystalline domains.

In order to provide random copolymers of the present invention, it is preferable to add all three kinds of monomers to the anion, ethylene oxide, glycidyl methyl ether and

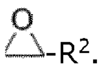

The reactivity ratio for both alkyl glycidyl ether employed and ethylene oxide is in the range of 0.5 to 1.7, preferably 0.7 to 1.3. The reactivity ratio is similar for example for all other monomers that correspond to the monomer units of formulae (II) and (III), also for example for alkenyl glycidyl ether like allyl glycidyl ether. For glycidyl methyl ether and ethylene oxide the reactivity ratio is in the range of 0.98 to 1.02. This results in almost ideally random copolymers. As can be seen, the anionic ring-opening (co)polymerization also allows for the simple introduction of cross-linkable substituents to the polyether backbone (e.g. by use of allyl glycidyl ether; AGE).

A further object of the present invention is a process for the preparation of membranes comprising the steps of

- optionally converting the reactive group of residue $R^2$ of one or more polyether copolymers of the present invention into a crosslinkable group and
- crosslinking one or more polyether copolymers of the present invention and/or one or more polyether copolymers as prepared in the process for the preparation of polyether copolymers of the present invention as disclosed herein.

If necessary, the reactive groups of polyether copolymers of the present invention that do not comprise reactive groups that are crosslinkable may be converted into reactive groups that are crosslinkable. An example of how this can be done is given above. Such reactions are however very well known by the expert in the art and do not need to be described in detail herein.

The crosslinking is also a well-known process step. Any known crosslinking process may be used. It may be carried out photochemically, thermally, by radiation or by other triggers. It is preferred that the crosslinking is performed photochemically by irradiation with light. An exemplary process for the preparation of the membranes of the present invention is depicted in Figure 2. As can be seen, a membrane of the present invention may be obtained in a simple two-step process. In the first process a polymer is formed by polymerization of epoxide monomers, i.e. ethylene oxide, glycidyl methyl ether and allyl glycidyl ether. This reaction is preferably performed by anionic ring-opening copolymerization (AROP) as known by the expert in the art and especially preferred by the method of AROP as described in detail in WO 2022/238532 A1. Details of the reaction conditions can for example be found in Example 2 of WO 2022/238532 A1. A terpolymer is obtained comprising monomer units derived from ethylene oxide, glycidyl methyl ether and allyl glycidyl ether. The glycidyl methyl ether unit inhibits crystallization of the terpolymer, while the allyl glycidyl ether unit allows for crosslinking. The terpolymer is then irradiated to crosslink the polyether copolymer of the present invention and to produce a membrane. Examples of the membranes of the present invention are shown in Figure 3.

Consequently, the terpolymerization of ethylene oxide, glycidyl methyl ether and allyl glycidyl ether unites 3 unique features within one material:

1 Fully amorphous or partial crystalline polyether with high polarity and low glass transition temperature equal to PEO.

2 Introduction of cross-linkable groups via well-known, controlled and industrially established polymerization methods.

3 Adjustable cross-linking content while preservation of amorphous properties by variation of the monomers of formulae (I), (II) and (III), e.g. EO/GME/AGE ratio.

The same is true when instead of allyl glycidyl ether another monomer is chosen for the monomer units of formula (III).

A further object of the present invention are single layer membranes comprising or consisting of one or more polyether copolymers of the present invention. Preferably, the single layer membranes comprise or consist of one or more crosslinked polyether copolymers of the present invention or consists of a crosslinked membrane prepared according to the process of the present invention. As can be seen from the examples, the membranes of the present invention provide a permeability of more than 100 Barrer and a carbon dioxide/nitrogen selectivity of more than 40, when measured with a 20/80 carbon dioxide/nitrogen mixture at 30 °C with a transmembrane pressure gradient of 2 bar. For preferred embodiment the permeability is more than 300 Barrer and the selectivity is 45. These membranes clearly overcome the limitations of crystallinity in PEO, as semicrystalline PEO exhibits a carbon dioxide permeability of only 12 Barrers, and go in the direction of the theoretical value of a fully amorphous PEO of 143 Barrers (H. Lin, B. D. Freeman, Journal of Membrane Science 2004, 239, 105). Further objects of the present invention are multilayer membranes comprising at least one single layer membrane of the present invention. Membranes often comprise several layers, one of which provides the functionality, e.g. selectivity, and other layer or layers provides or provide auxiliary functions like dimensional stability, strength and the like. The expert in the art knows what kind of layers to use in addition to the membrane of the present invention to achieve the desired effects. The layer of interest consisting of the layer of the present invention can be deposited as a film of micrometer to nanometer thickness for example via coating techniques, such as but not limited to spin-coating, dip-coating, kiss-coating, casting, and interfacial polymerization.

A further object of the present invention is a process for the separation of fluids, comprising the step of separating fluids by use of the membranes of the present invention. The fluids may be liquids or gases. The membranes of the present invention are especially useful in the separation of carbon dioxide from liquids or gases, preferably from gases. Preferably the process for the separation of fluids of the invention is a process for the separation of fluids, wherein carbon dioxide is separated from gas mixtures comprising carbon dioxide and nitrogen. Also preferred is a process for the separation of fluids, wherein carbon dioxide is separated from power plant flue gases. The inventive membranes may also be used in a process for the separation of fluids of the present invention, wherein carbon dioxide is separated from gas mixtures comprising carbon dioxide and hydrogen, wherein the process is preferably a syngas separation process. The inventive membranes may also be used in a process for the separation of fluids of the present invention, wherein water vapor is separated from gas mixtures that comprise nitrogen, preferably from air.

A further object of the present invention is the use of the inventive membranes for the separation of fluids, preferably for the separation of fluids as mentioned above.

**Brief description of the figures:**

Figure 1: Figure 1 depicts the principal process for the preparation of the membranes of the present invention starting from the monomers.

Figure 2: Figure 2 depicts membranes of the present invention prepared according to the process of the present invention.

Figure 3: Figure 3 depicts a digital photograph of a membrane made according to the process of the present invention.

**Examples:**

**Reagents:**

Chemicals were purchased from TCI, Acros Organics, Roth, Sigma Aldrich and Honeywell, unless otherwise noted. Ethylene oxide was obtained from Air Liquide. Deuterated solvents were purchased from Deutero GmbH. THF was flashed over basic aluminum oxide before usage. Glycidyl ethers were dried over $CaH_2$.

**Measurements:**

$^1H$ spectra were recorded on a Bruker Avance III HD 300 spectrometer with 300 MHz and referenced internally to residual proton signals of the deuterated solvent.

$M_n$ of all samples were determined from the corresponding size exclusion chromatograms (refractive index (RI) detector, DMF, calibration with PEG standards).

Size-exclusion chromatography (SEC) measurements were performed with dimethylformamide (DMF with 1 g/L LiBr) as the mobile phase (flow rate 1 mL/min) on poly(2-hydroxyethylmethacrylat) (PHEMA) 300/100/40 columns at 50 °C. Polymer concentrations were 1 mg/mL. Calibration was carried out using poly(ethylene glycol) standards (from Polymer Standard Service, Mainz, Germany).

Differential scanning calorimetry (DSC) measurements were carried out in the temperature range of -100 to 100 °C with a heating rate of 10 K/min at a TA DSC 250. The thermal history of the samples was excluded via two cooling and two heating cycles. For each sample, the glass transition and the melting temperatures were obtained from the second heating curve.

**Polymer synthesis**

Terpolymers of EO-GME-AGE with different compositions (see Table 1) were synthesized according to the following protocol:
Potassium tert-Butoxide (0.049 g, 0.433 mmol, 1 eq.) was added to a flame-dried and argon-filled anionic flask under an argon flow and subsequently dissolved in benzene. 3-Ethoxy-1,2-propanediol (0.052 g, 0.43 mmol, 1 eq.), dissolved in benzene, was transferred to the solution. Afterward, the reaction mixture was cooled with liquid nitrogen and high vacuum ($10^{-3}$ mbar) was applied. The mixture was heated to 60 °C for one hour and dried under dynamic high vacuum for 16 h. DMSO (4.87 mL) was added to dissolve the formed initiator salt. Then the solution was cooled using liquid nitrogen and GME (1.37 g, 1.40 mL, 15.6 mmol, 29 eq.) and AGE (0.44 g, 0.46 mL, 3.90 mmol, 7 eq.), which have been dried over calcium hydride were added with argon-flushed plastic syringes. The desired amount of ethylene oxide was condensed to a graduated ampoule that has been cooled to -78 °C using an ethanol/nitrogen mixture. Ethylene oxide (0.86 g, 0.88 mL, 19.5 mmol, 36 eq.) was transferred to the reaction flask via cryo transfer. The mixture was warmed up to 25 °C and stirred for 72 h under static high vacuum. Then the reaction flask was vented and methanol (0.12 mL) was added to terminate the polymerization. The reaction mixture was transferred to a round bottom flask and DMSO was removed under reduced pressure. The residue was dissolved in chloroform and filtrated. The filtrate was dried over anhydrous magnesium sulfate and filtrated again. Chloroform was removed under reduced pressure and the residue was dried under a high vacuum ($10^{-3}$ mbar) at 70 °C for 72 h. The product was obtained as a viscous, yellow liquid (2.14 g, 78 %).

**Membrane synthesis**

For the formation of membranes, terpolymers P1, P2 and P3 (Table 1) were utilized and crosslinked via UV light. P(EO-co-GME-co-AGE) (0.90 g) was dissolved in degassed chloroform (10.5 mL) or an ethanol/water mixture (10.5 mL). A stock solution of the photoinitiator 2,2-dimethoxy-2-phenyl acetophenone (DMPA) (8 mg/mL) was prepared in degassed chloroform. The stock solution (8 mg/mL, 1.00 mL, 2 eq./AGE) was added to the polymer solution and homogenized. The homogeneous solution of polymer and photoinitiator was cast into polytetrafluoroethylene molds under a nitrogen atmosphere in a glove bag. Afterwards, the solvent was allowed to evaporate for 20 h until a thin film was obtained. The film was irradiated with UV light ($\lambda$ = 365 nm) for at least 2 h to crosslink the polymers. The polymer film was transferred onto a supporting porous membrane layer prior to testing to prevent degradation during pressurizing.

For the formation of a membrane via thiol-ene-click reaction, terpolymer P4 (Table 1) was utilized and crosslinked via UV light. P(EO-co-GME-co-AGE) (0.90 g) was dissolved in ethanol/water mixture (10.50 mL). A stock solution of the photoinitiator 2,2-dimethoxy-2-phenyl acetophenone (0.2 eq. DMPA /polymer chain) in an ethanol/water mixture was prepared, to which bis(2-mercaptoethyl) ether (MEE) (1 eg MEE/AGE) was added. The stock solution was added to the polymer solution and homogenized, after which it was cast into polytetrafluoroethylene molds under a nitrogen atmosphere in a glove bag. The film was irradiated with UV light ($\lambda$ = 312, 365 nm) for at least 2 hours to crosslink the polymers. Afterwards, the solvent was allowed to evaporate overnight until a thin film was obtained. The polymer film was transferred onto a supporting porous membrane layer prior to testing to prevent degradation during pressurizing.

**Gas separation measurements conditions**

Mixed-gas (i.e., $CO_2/N_2$) selectivities were calculated by the ratio of the downstream (y) and upstream (x) mole fraction of the two gases by the following equation:

$$\alpha_{ij} = \frac{y_i/y_j}{x_i/x_j}$$

with $y_i$ and $y_j$ the mole fractions of components i and j in the permeate, $x_i$ and $x_j$ the mole fractions of the components i and j in the feed. During gas chromatography analysis, $y_i/y_j$ is determined from peak areas linked to mole fractions in the permeate, while $x_i/x_j$ is determined by the feed settings (20/80 $CO_2/N_2$).

Gas permeability was measured by accumulating gas permeate in an auxiliary cylinder of 75 $cm^3$. The pressure increase in the cylinder (dp/dt) was measured to calculate the gas permeability (P) of the membrane, according to:

$$P_{CO2} = 10^{10} \frac{y_{CO2}\, V\, L}{x_{CO2}\, P_{up}\, A\, R\, T} \frac{dp}{dt}$$

where $P_{CO2}$ is the $CO_2$ permeability (Barrer), $y_{CO2}$ is the mole fraction of $CO_2$ in the permeate, $x_{CO2}$ is the mole fraction of the component in the feed, V is the downstream volume ($cm^3$), A is the membrane permeation area (1.54 $cm^2$), L is the membrane thickness (cm), T is the operating temperature (K), $P_{up}$ is the upstream pressure (cmHg), R is the gas constant, and dp/dt is the pressure increase (cmHg/s).

The membranes were measured with a 20/80 $CO_2/N_2$ mixture at 30 °C, with a transmembrane pressure gradient of 2 bar.

Table 1 shows the compositions, the permeabilities and selectivities of the membranes produced. "n.d." means that this value has not been determined.

Table 1:

| Polymer | [EO/GME/AGE]* / mol% | $M_n$ / g $mol^{-1}$ | Thickness / μm | Permeability P/ Barrer | Selectivity α | $T_g$/ °C |
|---|---|---|---|---|---|---|
| P1 | 51/38/11 | 6400 | 232 ± 26 | 113.6 | 46.9 | -42 |
| P2 | 51/26/23 | 5600 | 219 ± 55 | 95.6 | 46.3 | -35 |
| P3 | 26/55/19 | 5700 | 266 ± 44 | 121.8 | 38.2 | n.d. |
| P4 | 75/16/9 | 5200 | 307 | 304 | 45 | -60 |

* determined via $^1$H NMR spectroscopy.

## Claims

**1.** Polyether copolymers comprising

(i) at least 1% of monomer units that have a structure of formula (I):

$$-[CH_2-CH_2-O]- \quad (I),$$

(ii) at least 1% of monomer units that have a structure of formula (II):

$$-[CHR-CH_2-O]- \quad (II),$$

wherein residue R is methoxymethyl
(iii) at least 1% of monomer units that have a structure of formula (III):

$$-[CHR^2- CH_2-O]- \quad (III)$$

wherein residue $R^2$ comprises at least one reactive group and

wherein all amounts in percent are based on the total number of monomer units in the polyether copolymers.

2. Polyether copolymers according to claim 1, wherein the sum of all monomer units of formulae (I), (II) and (III) in the polyether copolymers is at least 90%.

3. Polyether copolymer according to claim 1, wherein the polyether copolymers have at least a number average molecular weight of 400 g $mol^{-1}$.

4. Polyether copolymers according to any of the preceding claims, comprising

(i) 10% to 90% of monomer units that have a structure of formula (I),
(ii) 3% to 85% of monomer units that have a structure of formula (II) and
(iii) 5% to 30% of monomer units that have a structure of formula (III).

5. Polyether copolymers according to any of the preceding claims, wherein the at least one reactive group comprised in $R^2$ is a crosslinkable group, preferably selected from the group comprising carbon-carbon double bonds and carbon-carbon triple bonds.

6. Polyether copolymers according to any of claims 1 to 4, wherein $R^2$ is selected from the group consisting of

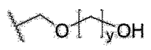
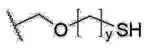
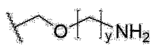
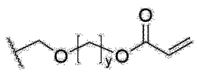
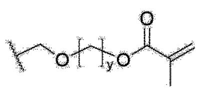
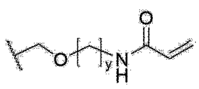
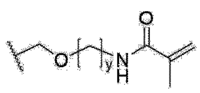
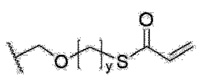
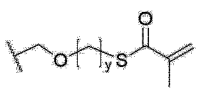
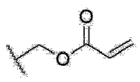
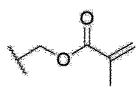
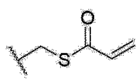
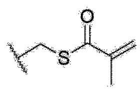
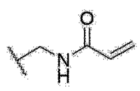
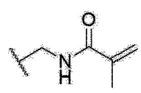
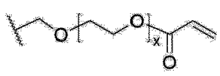
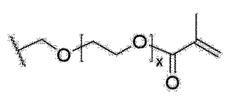
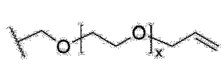
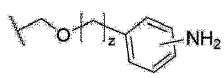
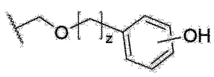
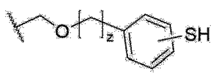
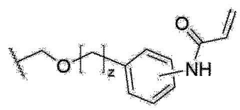
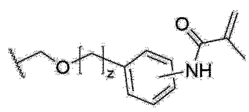
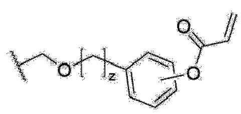
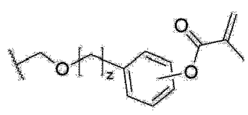
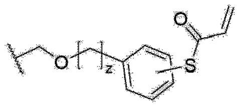
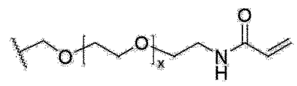
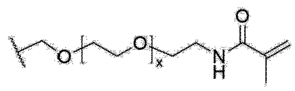
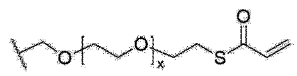
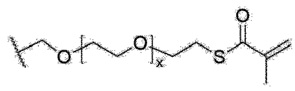
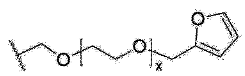
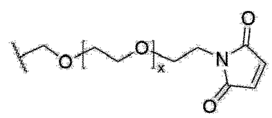
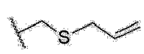
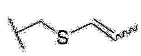
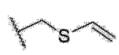

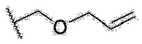
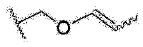
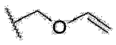
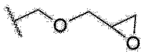
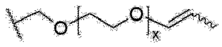
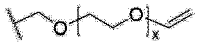
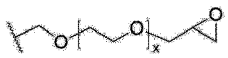
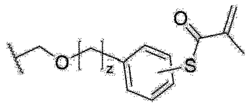
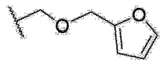
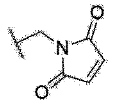
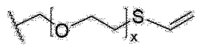
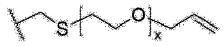
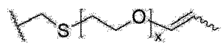
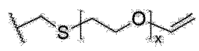

wherein x is an integer from 1 to 6, y is an integer from 2 to 6 and z is 0 or an integer from 1 to 6.

**7.** Polyether copolymers according to any of the preceding claims, wherein $R^2$ is $-CH_2-O-CH_2-CH=CH_2$.

**8.** Process for the preparation of polyether copolymers according to any of the preceding claims by anionic ring-opening copolymerization comprising the steps of:

- Providing an anion $An^-$,
- Adding ethylene oxide, a monomer of the formula (II) and a monomer of the formula (III), wherein R and $R^2$ are as defined in any of the preceding claims, in the amounts as described in any of the preceding claims and adding optionally further monomers,
- Allowing the polymerization to proceed at a temperature in the range of -10 to 90 °C.

**9.** Process for the preparation of membranes comprising the steps of

- optionally converting the reactive group of residue $R^2$ of one or more polyether copolymers of any of claims 1 to 7 into a crosslinkable group and
- crosslinking one or more polyether copolymers of any of claims 1 to 7 and/or one or more polyether copolymers as prepared in the process of claim 8.

**10.** Single layer membranes comprising or consisting of one or more polyether copolymer according to any of claims 1 to 7.

**11.** Multilayer membranes comprising at least one single layer membrane according to claim 10.

**12.** Process for the separation of fluids, comprising the step of separating fluids by use of the membranes of any of claims 10 or 11.

**13.** Process for the separation of fluids of claim 12, wherein carbon dioxide is separated from gas mixtures comprising carbon dioxide and nitrogen.

**14.** Process for the separation of fluids of any of claims 12 or 13, wherein carbon dioxide is separated from power plant flue gases.

**15.** Process for the separation of fluids of claim 12, wherein carbon dioxide is separated from gas mixtures comprising carbon dioxide and hydrogen, wherein the process is preferably a syngas separation process.

**16.** Process for the separation of fluids of claim 12, wherein water vapor is separated from gas mixtures that contain nitrogen, preferably from air.

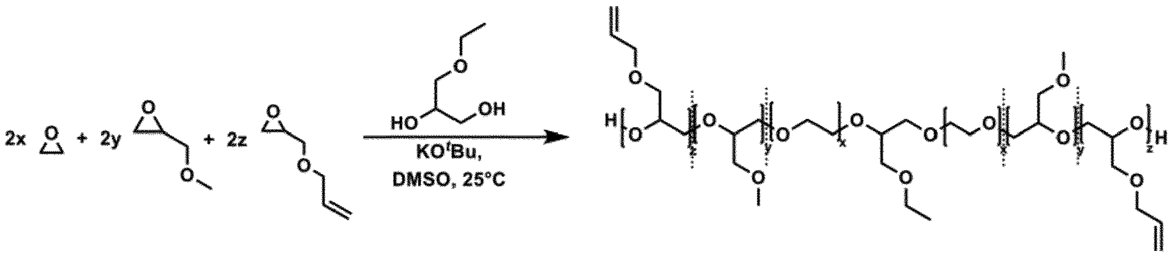


Figure 1

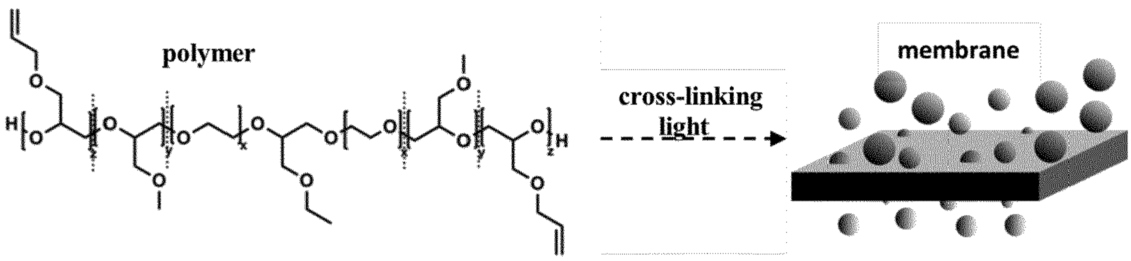


Figure 2

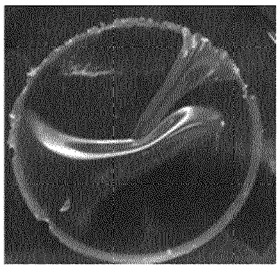

Figure 3

Europäisches Patentamt
European Patent Office
Office européen des brevets

# EUROPEAN SEARCH REPORT

Application Number
EP 24 15 1280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 657 484 A1 (HYDRO QUEBEC [CA]) 14 June 1995 (1995-06-14) * examples 1-3 * * column 10, lines 34-48 * | 1-7 | INV. B01D71/52 C08G65/26 |
| X | WO 2006/120332 A2 (PHOSTECH LITHIUM INC [CA]; UNIV MONTREAL [CA] ET AL.) 16 November 2006 (2006-11-16) * example 1c * | 1,2,4-7 | |
| X | US 6 656 252 B2 (DAISO CO LTD [JP]) 2 December 2003 (2003-12-02) * claims 1-10 * * Synthetic example 1; example 1 * * column 2 * | 1-16 | |
| A | HAN YANG ET AL: "Polymeric membranes for CO2 separation and capture", JOURNAL OF MEMBRANE SCIENCE, ELSEVIER BV, NL, vol. 628, 11 March 2021 (2021-03-11), XP086540239, ISSN: 0376-7388, DOI: 10.1016/J.MEMSCI.2021.119244 [retrieved on 2021-03-11] * abstract * * pages 5-7 * | 1-16 | TECHNICAL FIELDS SEARCHED (IPC) B01D C09J C08G |

The present search report has been drawn up for all claims

| Place of search | Date of completion of the search | Examiner |
|---|---|---|
| The Hague | 23 May 2024 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 24 15 1280

This annex lists the patent family members relating to the patent documents cited in the above-mentioned European search report. The members are as contained in the European Patent Office EDP file on
The European Patent Office is in no way liable for these particulars which are merely given for the purpose of information.

23-05-2024

| Patent document cited in search report | | Publication date | Patent family member(s) | | | Publication date |
|---|---|---|---|---|---|---|
| EP 0657484 | A1 | 14-06-1995 | CA | 2111047 | A1 | 10-06-1995 |
| | | | DE | 69433319 | T2 | 16-09-2004 |
| | | | EP | 0657484 | A1 | 14-06-1995 |
| | | | JP | H07206936 | A | 08-08-1995 |
| | | | US | 2004038132 | A1 | 26-02-2004 |
| | | | US | 2005159561 | A1 | 21-07-2005 |
| WO 2006120332 | A2 | 16-11-2006 | CA | 2506104 | A1 | 06-11-2006 |
| | | | CN | 101233630 | A | 30-07-2008 |
| | | | EP | 1878075 | A2 | 16-01-2008 |
| | | | EP | 2320500 | A2 | 11-05-2011 |
| | | | JP | 2008542979 | A | 27-11-2008 |
| | | | KR | 20080021642 | A | 07-03-2008 |
| | | | US | 2009305132 | A1 | 10-12-2009 |
| | | | WO | 2006120332 | A2 | 16-11-2006 |
| US 6656252 | B2 | 02-12-2003 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022238532 A1

### Non-patent literature cited in the description


- **L.M. ROBESON**. The upper bound revisited. *J. Memb. Sci.*, 2008, vol. 320, 390-400
- **GALIZIA, M.** ; **CHI, W. S.** ; **SMITH, Z. P.** ; **MERKEL, T. C.** ; **BAKER, R. W.** ; **FREEMAN, B. D.** 50th anniversary perspective: polymers and mixed matrix membranes for gas and vapor separation: a review and prospective opportunities. *Macromolecules*, 2017, vol. 50 (20), 7809-7843
- **L.S. WHITE** ; **K.D. AMO** ; **T. WU** ; **T.C. MERKEL**. Extended field trials of Polaris sweep modules for carbon capture. *J. Membr. Sci.*, 2017, vol. 542, 217-225
- **BANDEHALI, S.** ; **MOGHADASSI, A.** ; **PARVIZIAN, F.** ; **HOSSEINI, S. M.** ; **MATSUURA, T.** ; **JOUDAKI, E.** Advances in high carbon dioxide separation performance of poly (ethylene oxide)-based membranes. *Journal of Energy Chemistry*, 2020, vol. 46, 30-52
- **R. MATTHES** ; **H. FREY**. Polyethers Based on Short-Chain Alkyl Glycidyl Ethers: Thermoresponsive and Highly Biocompatible Materials. *Biomacromolecules*, 2022, vol. 23, 2219-2235
- **H. LIN** ; **B. D. FREEMAN**. *Journal of Membrane Science*, 2004, vol. 239, 105